# EUROPEAN PATENT SPECIFICATION

(11) **EP 3 348 081 B1**
(45) Date of publication and mention of the grant of the patent: **12.07.2023**
(21) Application number: 15757524.2
(22) Date of filing: 08.09.2015
(51) Int. Cl.: H04W 4/06, H04W 36/00, H04W 72/00

(54) **STREAMING SESSION CONTINUATION**
STREAMING-SITZUNGSKONTINUITÄT
CONTINUATION DE SESSION DE TRANSMISSION EN CONTINU

(43) Date of publication of application: 18.07.2018
(73) Proprietor: Telefonaktiebolaget LM Ericsson (publ), 164 83 Stockholm (SE)
(72) Inventor: WANG, Xiaohui, 216 41 Limhamn (SE); ÅKERMAN, Mårten, 212 29 Malmö (SE)
(74) Representative: Zacco Sweden AB
(86) International application number: PCT/EP2015/070451
(87) International publication number: WO 2017/041827

(56) References cited:
- EP-A1- 2 445 162
- WO-A1-2012/000165
- WO-A1-2013/022470
- WO-A1-2015/061983
- WO-A1-2015/064383
- US-A1- 2013 028 118
- US-A1- 2015 109 987
- US-A1- 2015 172 066

## Description

### TECHNICAL FIELD

The embodiments of the present invention relates to streaming session continuation in wireless communication networks, and in particular to moving of streaming sessions from eMBMS to unicast.

### BACKGROUND

In 3G systems, a service denoted Multimedia Broadcast Multicast Service, MBMS, was offered only by a few mobile operators. This limited deployment of MBMS may, at least partly, have been due to its limited peak bit rates and limited capacity, not allowing for standard TV video quality. However, the enhanced MBMS, eMBMS, for e.g. LTE does not suffer from the same disadvantages as the MBMS.

eMBMS provides transport features for sending the same content information to a plurality of users. For example, content could be sent to all users in a cell via broadcast, or, to a given set of users in a cell via multicast. A subset of the available radio resources in a cell or network could be used for eMBMS, while the remaining available radio resources could be used to support transmissions towards a particular user, i.e. so-called unicast services. In eMBMS, it is possible to either use a single Radio Access, RA, node or multiple RA nodes for transmission to multiple wireless devices. The use of multiple RA nodes is referred to as MBSFN. A specific area where one or several RA nodes/cells transmit the same content is referred to as an MBSFN area.

A typical envisioned use for LTE broadcast services is the provision of video, e.g. TV, and other multimedia services, which require much capacity. eMBMS reuses existing LTE spectrum for broadcast, which enables network operators to offer e.g. mobile TV without the need for additional expensive licensed spectrum, and without requiring new infrastructure and end-user devices. For example, the eMBMS service can offer many more TV programs in a specific radio frequency spectrum as compared to traditional terrestrial TV broadcasting, e.g. since eMBMS may be employed based on the principles of Interactive Multicast, such that TV content only is transmitted where there currently are viewers. The eMBMS service also provides better system spectral efficiency than video-on-demand over traditional cellular unicasting services, since in eMBMS, each TV program is only transmitted once in each cell, also if there are several viewers of that program in the same cell. The MBSFN transmission mode further improves the spectral efficiency, in that it is based on the principles of Dynamic Single Frequency Networks, DSFN. This implies that it dynamically forms single-frequency networks, SFNs, i.e. groups of adjacent base stations sending the same signal simultaneously on the same frequency sub-carriers. This may be applied e.g. when there are mobile TV viewers of the same TV program content in the adjacent cells. The LTE OFDMA downlink modulation and multiple access scheme eliminates self-interference caused by the SFN:s.

MBSFN is a transmission mode which exploits LTE's OFDM radio interface to send multicast or broadcast data as a multi-cell transmission over a synchronized single-frequency network, SFN. The transmissions from the multiple cells are sufficiently tightly synchronized for each to arrive at the UE within the OFDM Cyclic Prefix so as to avoid Inter-Symbol Interference. In effect, this makes the MBSFN transmission appear to a wireless device as a transmission from a single large cell, which dramatically increases the Signal-to-Interference Ratio, SIR, due to the absence of inter-cell interference.

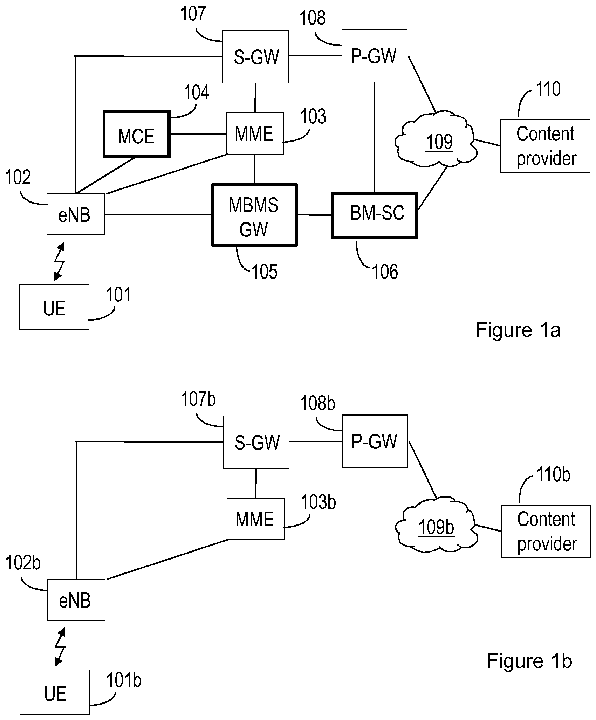

Figure 1a illustrates the architecture of an LTE network operable to provide eMBMS services. The initiated reader may notice that there are some additional nodes, as compared to a regular LTE architecture. These additional nodes are outlined with a bold line in figure 1a, in order for them to be easier to identify. The nodes should be seen as logical nodes or functions, rather than physical nodes. However, the nodes could also be implemented as physical nodes.

Figure 1a shows a wireless device 101, also denoted "UE" in the figure. The wireless device is served by an RA node 102, also denoted "eNB" in the figure. The wireless device 101 may also be referred to as camping on a cell provided by the RA node, or as being connected to the RA node 102, or as being connected to the network via the RA node 102. The RA node 102 is connected to a network node 103, also denoted Mobility Management Entity, MME. The MME handles e.g. connection and release of bearers to a wireless device and also handles wireless device transitions between IDLE and ACTIVE state. One MME is connected to a plurality of RA nodes, which in their turn may serve a plurality of wireless devices. A Serving Gateway, S-GW, 107, connects the LTE core network to the LTE Radio Access Network, RAN. A Packet Data Network Gateway, P-GW, 108, connects the S-GW to the internet 109, and/or some other Packet Data Network, PDN. So far, the described nodes are all part of a standard LTE architecture.

The nodes in figure 1a, which are dedicated to LTE broadcast services, are the Multi-cell/Multicast Coordination Entity, MCE 104; the eMBMS Gateway, MBMS GW, 105; and the Broadcast Multicast Service Center, BM-SC, 106.

The MCE 104 is a logical node in the RAN handling allocation of radio resources and transmission parameters, such as time-frequency resources and transport format, across the cells in an MBSFN area. The MCE 104 can control multiple RA nodes, each handling one or more cells.

The BM-SC 106 is located in the eMBMS service network and is responsible for authorization and authentication of content providers, charging, and the overall configuration of the data flow through the core network. The MBMS GW 105 is a logical node handling multicast of IP packets from the MB-SC 106 to all RA nodes involved in transmission in an MBSFN area. The MBMS GW also handles session control signaling via the MME.

As a reference, an LTE network architecture without support for eMBMS is illustrated in figure 1b. The nodes 102b-103b and 107b-11 0b have the same functions as the nodes having the corresponding numbers in figure 1a.

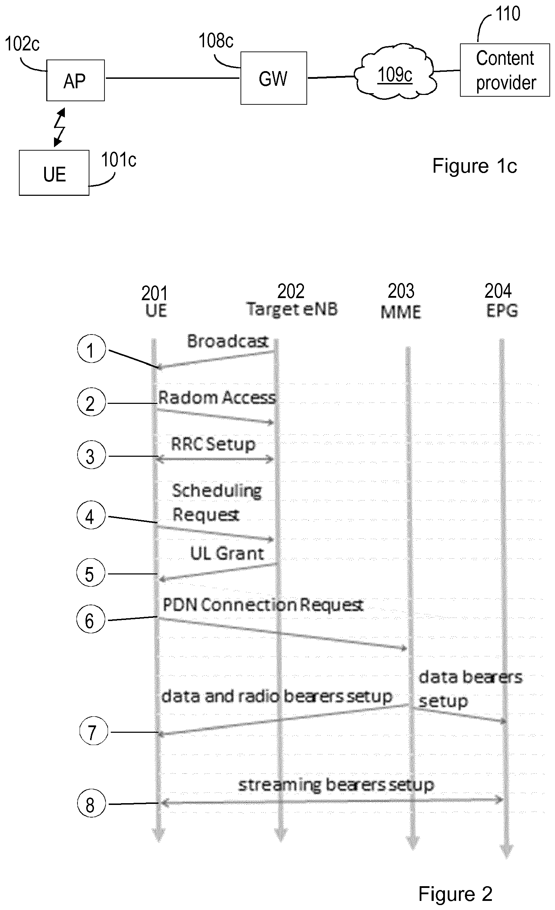

Further, figure 1c illustrates an architecture of a Wireless Local Area Network, WLAN. In a WLAN, the RA nodes are often referred to as Access Points, APs, which is also the terminology used in figure 1c. The AP 102c is connected to the Internet 109c via a gateway 108c.

Delivering popular multi-media sessions to UEs via eMBMS in a network as the one illustrated in figure 1a has gained traction due to its efficiency as compared to conventional unicast via 3^{rd} Generation Partnership Project, 3GPP, networks. From the perspective of a Radio Access Network, RAN, a Single Frequency Network, SFN, comprising multiple network nodes/cells may be formed to deliver the content in a much wider area with less inter-cell interference and a higher degree of spatial diversity. On the other hand, in order to deploy the technique to a wide audience in a realistic environment, session continuity has to be ensured. For example, when a user enters a building with weak/bad macro-cell, and thus eMBMS, coverage, an on-going eMBMS streaming session needs to be transferred from multicast to unicast, e.g. via small indoor cells or a local network such as a WLAN. A possibility for seamless transfer of a streaming session between eMBMS and unicast is identified as a requirement for the success of use of eMBMS for streaming services.

A transition of a streaming session between eMBMS and unicast has been investigated in the 3GPP Technical report TR 23.768, where two solutions have been proposed. In section 6.1.2.2.2 of TR 23.768, the "Make-Before-Break" approach is described, and in section 6.1.2.2.3, the "non-Make-Before-Brake" approach is described. In the "Make-Before-Break" approach, the UE receives service data via eMBMS from a content provider (GCSE-AS in figure 1a), and keeps monitoring the quality of the eMBMS multicast. When the quality of the multicast is lower than a pre-defined value, the UE informs the GCSE-AS about this, and the GCSE-AS responds through application signaling that the UE should move from multicast to a unicast connection in the cell currently serving the UE with eMBMS multicast. When having accomplished a unicast connection for the streaming session in the current cell, the UE, with the unicast streaming service, will be handed over by a standard handover procedure to a target cell, and continue the unicast streaming session in the target cell.

In the "non-make-before-break" approach described in section 6.1.2.2.2 of TR 23.768, a UE experiencing bad eMBMS multicast coverage also indicates this to a GCSE-AS. However, in this approach, the UE is not handed over to a target cell, but itself starts a Random Access procedure towards a target cell for establishing a unicast connection. The procedure of this RA procedure and connection is illustrated in figure 2.

However, as realized by the inventors, there are problems associated with these solutions, which may be overcome by the solution provided herein. The realized problems will be further described below.

WO 2015/061983 A1 discloses a method and apparatus to switch from broadcast to unicast for continued reception of the eMBMS broadcast content based on the at least one MBSFN threshold and the at least one MBSFN measurement.

### SUMMARY

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. It is desired to provide seamless streaming session continuation in wireless communication networks. This may be achieved by the invention as defined in the appended set of claims. By applying the solution described herein, a Quality of Experience, QoE, of a streaming service may be improved, which may increase the acceptance for streaming services via eMBMS.

### BRIEF DESCRIPTION OF DRAWINGS

The foregoing and other objects, features, and advantages of the technology disclosed herein will be apparent from the following more particular description of embodiments as illustrated in the accompanying drawings. The drawings are not necessarily to scale, emphasis instead being placed upon illustrating the principles of the technology disclosed herein.
**Figure 1a** shows an LTE network configured for eMBMS according to the prior art.
**Figure 1b** shows an LTE network not configured for eMBMS according to the prior art.
**Figure 1c** shows a WLAN network according to the prior art.
**Figure 2** shows a signaling diagram for setting up a unicast streaming session via a target node according to the prior art
**Figures 3-5** are flow charts showing methods performed by a wireless device according to exemplifying embodiments.
**Figure 6** shows a signaling diagram for setting up a unicast streaming session via a target node according to an exemplifying embodiment.
**Figure 7** is a flow chart showing a method performed by a wireless device according to an exemplifying embodiment.
**Figure 8** is a flow chart showing a method performed by a network node according to an exemplifying embodiment.
**Figures 9a-9c** illustrate different implementations of a wireless device according to exemplifying embodiments.
**Figures 10a-10c** illustrate different implementations of a network node according to exemplifying embodiments.

### DETAILED DESCRIPTION

The inventors have realized that currently discussed solutions for how to move a streaming session from eMBMS to unicast may be insufficient in regard of e.g. quality of experience for users of the streaming service. In other words, a move according to prior art solutions may not appear seamless to a user. The solution disclosed herein is primarily intended for eMBMS provided in LTE networks, and will mainly be described herein in terms of LTE. However, the solution is also applicable in other types of networks having similar broadcast services, such as Further enhanced MBMS, FeMBMS, to be specified in the so-called 5G.

For example, the "Make-Before-Break" approach referred to above will not work for dedicated SFN, since in such networks there will be no resources available for set up of a unicast connection before making a handover. For a shared SFN, it may be possible to set up a unicast connection using resources not occupied by the multicast services; yet the RAN and core network may not grant the random access admission for setting up radio or data bearers for unicast due to a limited amount of available resources in the presence of multicast.

Even if the Random Access and Resource Request are granted in shared SFNs it may take time and signaling resources to set up a unicast connection steered by the GCSE-AS located deep in the content provider's service network. During the time it takes to establish the unicast connection, the UE may lose the eMBMS coverage, entailing an interruption of the streaming session. Further, this approach implies that the same streaming session is provided, simultaneously, to at least one UE both by multicast and unicast within the same cell until the hand over is performed, which is inefficient in terms of resource usage, and leads to that the wireless device has to process parallel data in the same frame yielding heavier load in LTE baseband. Further, since the communication network is not informed about the purpose of the addition of a unicast session, the multicast and unicast sessions are treated as being un-correlated.

The non-Make Before Break, on the other hand, avoids the problem of having unicast and multicast simultaneously in the same cell. However, this approach implies a risk of creating an interruption or gap in the streaming session in the process of setting up the connections required for continuing the streaming session via unicast via a target node. This may be the case even if all the standard resource requests are granted without problems by the mobile RAN and core network. The procedure for setting up the connections necessary for continuing a streaming session via unicast via a target node/in a target cell will be described below with reference to figure 2.

A UE 201 engaged in a streaming session via eMBMS, via a source eNB (having noticed that the received quality of the multicast streaming session has become unsatisfying) detects a signal, 1, from a possible target eNB 202, enabling the UE 201 to identify the possible target eNB 202, and the UE then makes a RA, 2, towards the possible target eNB (the transmission of a preamble from the target eNB to the UE is not explicitly illustrated in figure 2). Then, an RRC Setup, 3, is performed, i.e. the UE 201 connects to the target eNB 202. The UE 201 then sends a scheduling request, 4, to the target eNB in order to be able to initiate setup of a unicast streaming session. The target eNB 202 (possibly) sends an UL grant, 5, to the UE, enabling the UE to send a PDN connection request, 6, to the MME 203 associated with the target eNB 202. The MME then (possibly) initiates, 7, the setup of the bearers necessary for the unicast streaming, i.e. bearers from a service provider to the UE via the Evolved Packet Gateway, EPG (S-GW and P-GW), 204 and the target eNB 202. Then, the unicast streaming bearers, 8, are set up, and the streaming session may continue via unicast in the new cell. This procedure may take some time to complete even when all requested resources are granted without problems. The UE 201 would with reference to figures 1a and 1b correspond to UE 101,101b; the target eNB 202 would correspond to eNB 102b; the MME 203 would correspond to the MME 103; and the EPG would correspond to the P-GW 108b and the SGW 107b.

The basic network architecture shown e.g. in figure 1a used for exemplifying embodiments of the solution described herein is a similar architecture as the one used in 3GPP TR 23.768, although the streaming servers can be implemented physically as an entity close to the PGW or somewhere in a so-called "cloud" other than located as a part of a multicast content application server. Further, according to the solution described herein, the URL of the streaming server for unicast is managed by the BM-SC and may be announced to the UE, e.g. in association with the multicast set-up procedure. The UE may then save the URL for starting or restarting, i.e. continuing, the session if the desired eMBMS via MBMS-GW and SFN is not feasible or no longer available.

The pre-conditions for the embodiments of the solution descried herein may be the same as, or similar to, the ones in 3GPP TR 23.768, in that a UE is on the way of moving out of an eMBMS coverage area, and therefore performs measurement for the purpose of finding a target RAN, RAT or target cell for setting up unicast connections.

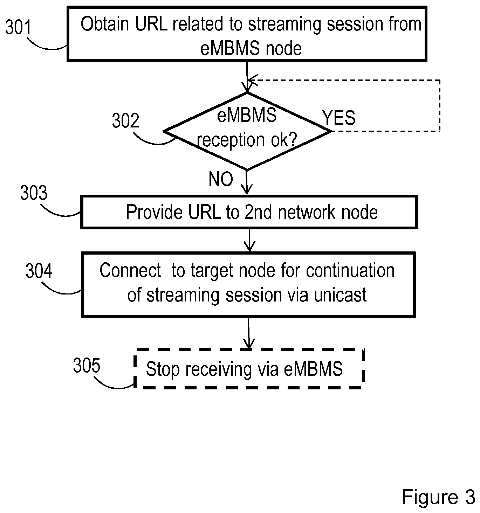

The solution described herein provides a more efficient way for moving a wireless device from eMBMS broadcast to unicast than what is achieved with prior art technology. Exemplifying embodiments of the inventive solution will be described below with reference to figures 3-8

When referring to the broadcast service eMBMS herein, especially when describing embodiments of the solution, this term is considered to also refer to developments and variants thereof, such as Multicast-Broadcast Single-Frequency Network, MBSFN, which also was briefly described above.

Within the context of this disclosure, the terms "wireless device" or "UE" are used for describing a device engaged in a streaming session. These expressions are intended to encompass any type of wireless device which is able to communicate with a network node, such as a base station, and/or with another wireless device by transmitting and/or receiving wireless signals. Persons skilled in the art may also refer to such a device e.g. as a communication device, a mobile terminal, a stationary or mobile wireless device for machine-to-machine communication, an integrated or embedded wireless card, an externally plugged in wireless card, a dongle, etc., depending on preference, capacity of the device and/or type of network in which it is operable.

The expression "target node" as used in this disclosure is intended to encompass any type of radio access node which is capable of wireless communication with a wireless device. Persons skilled in the art may also refer to such a radio access node as a radio base station, an access point, an eNB, a NodeB, a macro node, a pico, femto or micro node, a Home eNodeB, a Home NodeB or a WLAN AP, depending on preference, capacity of the node and/or type of network at hand.

The expression "network node" may refer to the same type of nodes as "target node" as defined above, but also encompasses other types of nodes residing e.g. in a core network, such as a centralized network node performing one or more specific functions.

### Exemplifying method embodiments figures 3-8

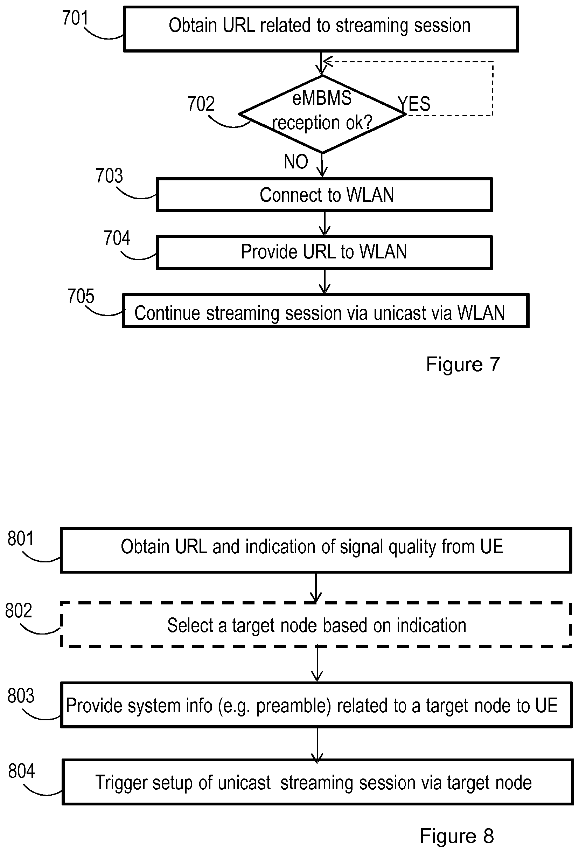

First, exemplifying method embodiments performed by a wireless device, here denoted UE, will be described with reference to figures 3-7. Then, further below, exemplifying method embodiment performed by a network node will be described with reference to figure 8. Embodiments of the UE and network node will be described further below.

Figure 3 illustrates an exemplifying generalized embodiment of a method performed by a UE operable in a communication network. The method illustrated in figure 3 comprises obtaining 301 an URL of a streaming server providing data for the streaming session from a first network node providing the eMBMS. The method further comprises detecting 302 that a signal quality related to the eMBMS falls below a threshold. The method further comprises providing 303 the obtained URL to a second network node in order to induce the second network node to prepare for unicast of the streaming session via a target node; and connecting 304 to the target node for continuation of the streaming session via unicast. When obtaining the streaming session via unicast via the target node, the UE may stop receiving the streaming session via eMBMS multicast, which is illustrated as an action 305 in figure 3. This action is illustrated with a dashed outline, since it is not necessarily regarded as comprised in the method.

The providing of the URL associated with a streaming server to a second network node, e.g. when about to leave an eMBMS coverage area, enables this second network node to prepare for a continued delivery of the streaming session via unicast via a target node. Such a preparation may comprise triggering a setup of a set of bearers required for achieving the unicast streaming session. Given the preparation based on the URL, the unicast session may be accomplished faster, and thus more "seamless" than according to prior art solutions.

The communication network providing the eMBMS session is primarily envisioned to be a network operable according to a radio access technology standardized by or within the 3^{rd} Generation Partnership Project, 3GPP, such as LTE or a development thereof. An example of an architecture of such a network operable to provide eMBMS is illustrated in figure 1a.

The term URL is used here as referring to an identifier or locator of a server providing data for the streaming session. Such a server, or corresponding node, may also be referred to as a content provider herein. The URL enables finding, addressing and/or setting up contact with the content provider or server. As previously mentioned, the URL associated with the streaming session may be handled by the BM-SC. The URL may thus be obtained 301 e.g. from a BM-SC via a radio access network node, such as an eNB being part of a SFN. The URL may be announced to the UE, and obtained by the UE, e.g. in association with a multicast set-up procedure when starting to receive the streaming session via eMBMS. The URL may then be saved or otherwise kept by the UE for future use, as will be described below.

The signal quality, which is detected 302 by the UE, may be e.g. a quality in terms of a Reference Signal Received Power, RSRP, or a Reference Signal Received Quality, RSRQ or block error rates. That is, the UE may detect e.g. when an RSRP associated with signals received from network nodes providing the eMBMS falls below, or meets, a power threshold. Such a threshold for a signal quality may be set to an adequate level based on e.g. statistics from simulations or real systems. The threshold may e.g. be selected as slightly exceeding a minimum level for ensuring data transfer of a certain rate. The purpose of the threshold is to enable the UE to detect when there is a risk of losing or dropping the eMBMS streaming session and that it is time to search for alternatives.

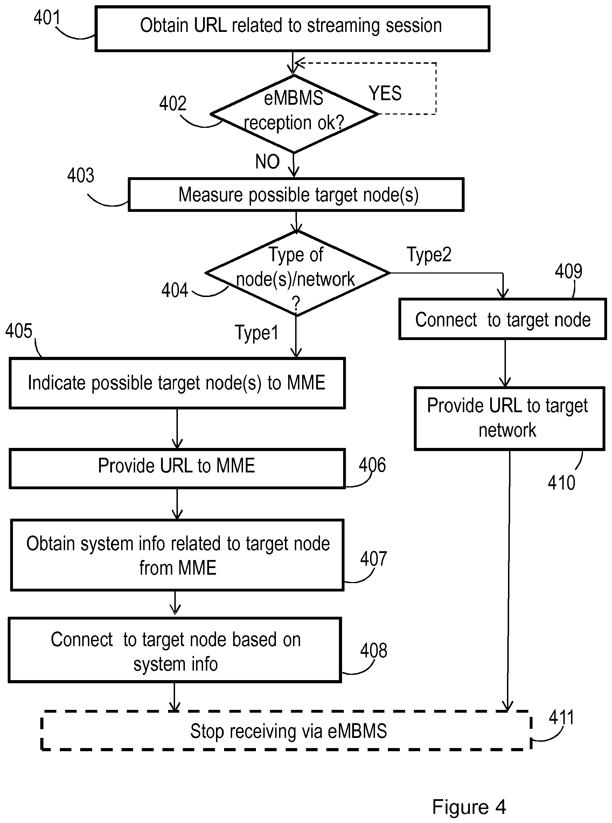

The second network node, to which the URL is provided 303 after detecting 302 that a signal quality of the eMBMS is "low", is different for different embodiments of the solution, which will be further described below, e.g. with reference to figure 4. The connection to a target node may also comprise different actions depending on embodiments and the type of available possible target nodes. It should be noted that the exemplifying embodiments described herein are not related to a multicast to unicast transition within the same source cell, as in the initial step in the Make Before Break solution described above. The target node should thus be assumed to be associated with a different cell or an at least partly different coverage area than the cell or area in which the eMBMS is provided.

Figure 4 illustrates an exemplifying method embodiment comprising two different branches, where the selection of branch depends on the type of available possible target node(s) or possible target network(s). In case there are only available possible target nodes of a first type, Type1, actions 405-408 are performed, and when there are only available possible target nodes of a second type, Type2, actions 409-410 are performed instead. In case possible target nodes of both types are available, a priority order may be defined, such that one of the types is preferred before the other. Alternatively or in addition, a set of rules may be defined for when one of the types should be preferred before the other. For example, target nodes of Type1 may be preferred when entering an indoor environment, since this type of nodes are expected to provide a better coverage, e.g. in large buildings than nodes or networks of Type2. On the other hand, target nodes of Type2 may be preferred, in order to relieve pressure on nodes of Type1. Actions 401 and 402 corresponds to the actions 301 and 302 in figure 3. In the method illustrated in figure 4, it is further explicitly shown that the UE measures 403 possible target nodes. This may comprise that the UE searches for reference signals broadcasted by possible target nodes. Further, a signal quality related to at least one possible target node may be measured. The result of the measurements may be required to fulfil a condition, such as that a received power of a signal from at least one available target node should exceed a threshold in order for the UE to determine that there is at least one available possible target node. Based on these measurements, the UE may determine 404 which type of network the possible target nodes operates in, i.e. the type of the possible network nodes. Then, depending on the type of the possible target node or nodes, different actions are taken.

In order to facilitate understanding, it could be said that the first type, Type1, of target network/nodes is primarily envisaged to be operating according to a radio access technology standardized by or within the 3GPP, just as the network providing the eMBMS. The target network may operate according to the same standard as the network providing the eMBMS, e.g. LTE, or according to another standard, such as WCDMA. The important parameter here is that networks operating according to the same or different 3GPP standards may cooperate in handing over UEs from one network to the other, which is sometimes referred to as an inter-RAT hand over. The second type, Type2, of target network/nodes may be assumed to be part of a network which does not cooperate in terms of hand over with the network providing the eMBMS. In case the network providing the eMBMS is a 3GPP network, the Type2 target network/nodes is not part of a 3GPP network, i.e. is not operating according to a 3GPP standard. Examples of such non-3GPP networks are e.g. WLAN and new wireless technologies.

Further, the method illustrated in figure 4 comprises; when the at least one possible target node is of a first type, Type1: indicating 405 a signal quality related to the at least one possible target node to the second node. The signal quality may be measured in action 403 in association with searching for possible target nodes, and/or be measured in this branch before indicating a result of the measurements to the second network node. Based on the indicated signal quality, the second node, which in this case would be a control node, such as an MME (MME is the term used in figure 4), may select a suitable target node from amongst a plurality of indicated possible target nodes.

Further, the URL is provided 406 to the second node, which then may trigger, i.e. initiate, the setup of the bearers necessary for the unicast streaming via the target node. This would be e.g. bearers between a Packet Gateway associated with the target node and a server, locatable by means of the URL, providing data for the streaming session; and bearers between the Packet Gateway, and the target node. This implies that these bearers may be set up, or at least be about to be set up, before the UE has connected to the target node. The URL could be provided to the second node together with the indicating of a signal quality of the at least one target node, e.g. in the same message, or separately.

The method illustrated in figure 4 further comprises obtaining 407 from the second network node, in response to the indicating 405 of signal quality, system information related to the target node. The system information should be such that it enables the wireless device to connect to the target node without making a complete RA procedure, as the one illustrated in figure 2. This is enabled when the system information comprises e.g. a contention-free RA preamble for connection to the target node and/or an RA channel configuration for connection to the target node, including information e.g. about timing and OFDM subcarriers used by the target node.

When the UE has obtained 407 the system information, the UE may connect 408 to the target node based on this system information. For example, the UE then knows the timing and subcarriers to be used for the target node, and may thus transmit a contention-free preamble, obtained from the second network node, to the target node in an adequate manner. This will be further described below.

Returning to the determining 404 of the type of the target network/nodes in figure 4, given that the at least one possible target node is of a second type, Type2, e.g. a WLAN node, the second branch of the embodiment illustrated in figure 4 is entered (i.e. actions 409-410). The UE connects 409 to a target node, which would be an AP in case of WLAN. Further, the URL obtained in action 401 is provided 410 to a second network node, which in this case or branch is a node of the target network. In case of a WLAN, the second node could be e.g. an access point, AP, an access controller and/or a gateway The URL would in the latter cases probably be delivered via the target node, i.e. the AP. That is, the second network node is not necessarily the same node as the target node. The second network node may then, based on the URL trigger an initiation/set up of the bearers necessary for delivery of the streaming session via unicast via a/the target node.

For both branches illustrated in figure 4, the UE may stop 411 "listening to", i.e. receiving the eMBMS streaming session when being provided with the streaming session via unicast via the target node. For example, the UE may drop the eMBMS via LTE and continue the on-going session solely via WLAN when the content received via WLAN has a quality which is higher than a pre-defined value, which may be determined e.g. by looking at the error rates of decoded data blocks. Thereby, there will be no noticeable interruption of the on-going session for the user.

While figure 4 illustrates an embodiment where different actions may be taken depending on the type of available target nodes, it should be noted that embodiments relating only to one type of target nodes are, obviously, also possible.

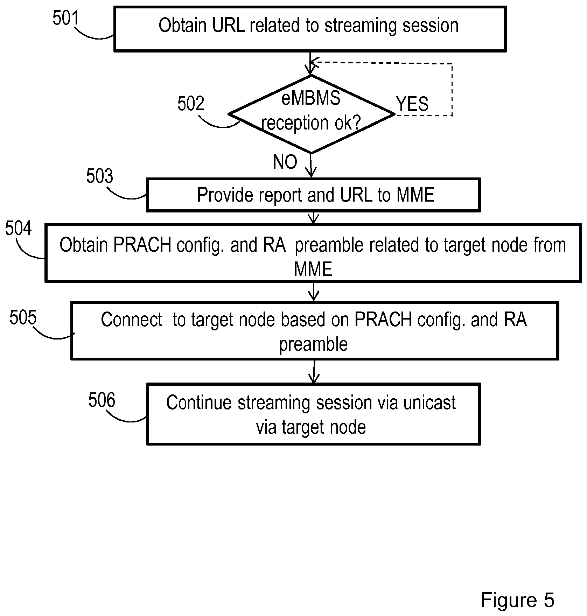

Figure 5 illustrates an exemplifying method embodiment to be performed by a UE. The method is addressing target nodes operable in a network of the first type, Type1, with which the network providing eMBMS may at least cooperate in terms of hand over. For example, the network providing the eMBMS and the target network may both be LTE networks, or developments thereof. LTE-terminology will mainly be used below. The nodes providing the eMBMS and the at least one possible target node may also belong to the same network, where the nodes providing the eMBMS are e.g. macro nodes in a SFN, and the at least one possible target node is a node of lower power than a macro, e.g. an indoor node, such as a pico, femto or micro node. Typically, not all radio access nodes in a wireless communication network are configured for eMBMS. In the network illustrated in figure 1a, this would correspond to that not all eNBs 102 are connected to the MCE 104. This may also be referred to as that eMBMS is not set up for the radio access node or for a cell.

In figure 5, the actions 501 and 502 correspond to the previously described actions 301-302, and 401-402. The method illustrated in figure 5 further comprises providing 503 the obtained URL and a report of results from measurements performed on signals from the at least one possible target node. The URL and the report are provided to an MME responsible for, or at least associated with, the UE. The report may comprise explicit numbers or references to e.g. a RSRP and/or a RSRQ, or some other quality or characteristic related to signals received from the at least one target node. In case the report indicates a plurality of possible target nodes, one of these will be selected as target node by the MME. If the report indicates only one possible target node, this node will be the target node.

In response to the indicating 503 of a signal quality (providing of a report), system information in form of a PRACH configuration related to the target node, and a contention-free RA preamble are obtained 504 from the MME. Based on this information, the UE connects 505 to the target node and may continue 506 the streaming session via unicast via the target node very fast, since the providing of the session via unicast has been prepared.

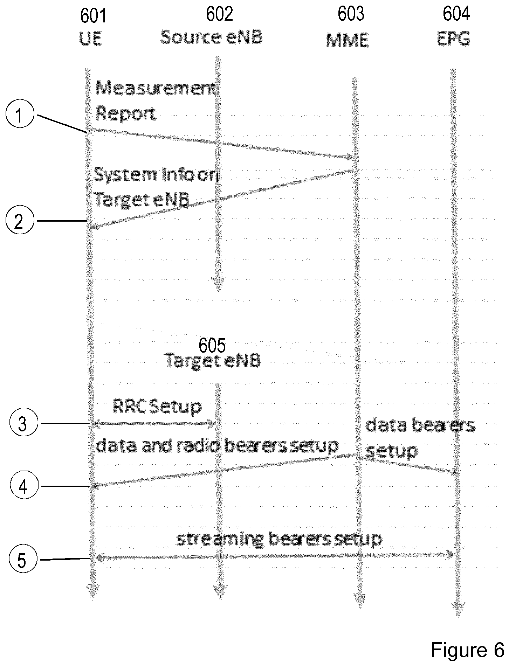

Figure 6 illustrates signaling related to an exemplifying embodiment not covered by the claimed invention, where the target node 605 is of the first type, Type1. LTE terminology is used for the nodes, such that the target node is denoted target eNB 605, an access node 602 via which the UE indicates a signal quality to the second network node is denoted Source eNB.

Further, the second network node/control node 603 is denoted MME and a gateway node 604 to be involved in the providing of the session for unicast is denoted EPG. The signaling diagram shown in figure 6 should be compared with the signaling diagram shown in figure 2 in order to appreciate some of the benefits of the solution described herein.

The signaling diagram of figure 6 starts with that a UE 601 indicates 1 a signal quality related to at least one possible target node to the MME 603 via the source eNB 602. The URL could be provided together with the measurement report, e.g. could be comprised in the measurement report or be provided in the same message. This action corresponds to the previously described actions 405-406 and 503. The UE 601 then obtains 2 system information related to the target eNB, enabling the UE 601 to connect 3 to the target eNB 605 without sending an RA request, and, in case an RA preamble has been obtained from the MME 203 in the system information, without having received an RA preamble from the target eNB 605. The MME 603 triggers or initiates, 4, the setup of the bearers necessary for the unicast streaming; the unicast streaming bearers, 8, are set up, and the streaming session may continue via unicast in the new cell.

When comparing the signaling scheme in figure 6 with the one in figure 2, it may be observed that several time consuming actions present in the scheme in figure 2 may be eliminated by applying of the solution described herein, which improves the chances for that the streaming session may be transferred from multicast to unicast for the UE without noticeable interruption of the on-going session for the user. For example, according to the signaling scheme in figure 6, no reading of System Information (i.e. step "1" in figure 2) nor performing of an RA contention procedure in the target eNB 605 is necessary. Further, no request for, nor grant of, resources to send a PDN Connection Request need to be sent, and no PDN connection Request needs to be sent from the UE. This enables a fast transfer from eMBMS to unicast, and may avoid breaks, gaps, glitches or other artefacts in the streaming session, which will thus appear seamless to a consumer.

Figure 7 illustrates another exemplifying method embodiment to be performed by a UE engaged in a streaming session via eMBMS. The method is addressing target nodes operable in a network of the second type, Type2, with which the network providing eMBMS does not cooperate in terms of hand over. For example, the network providing the eMBMS may be an LTE network, or a development thereof, and the target node or nodes may be operating in a WLAN. The method illustrated in figure 7 comprises obtaining 701 an URL related to the streaming session from a first network node providing the eMBMS, e.g. a BM-SC. When it is detected 702 that a signal quality related to the eMBMS falls below a threshold, the UE connects to an available network of Type2, e.g. an AP of a WLAN. The UE then provides the URL, which was previously obtained from the network providing the eMBMS, to a second network node in the Type2 target network, e.g. the AP to which it has connected, or to another node in the target network. Based on the URL, the Type2 network node may prepare for unicast of the streaming session via a target node. The streaming session may then be continued 705 via the target node, and the eMBMS session may be left.

If the received contents via unicast have a measured quality lower than another pre-defined value and a measured quality of eMBMS related cells is higher than yet another pre-defined value, which may be the case e.g. for a user going out of a building, the UE may automatically be redirected from unicast to eMBMS.

So far, method embodiments to be performed by a UE have been described. Below, an exemplifying method embodiment to be performed by a network node will be described with reference to figure 8. The network node may be assumed to be a control node, such as an MME, associated with a UE when being engaged in the eMBMS streaming session. The method in figure 8 comprises obtaining 801 an indication of signal quality from a UE engaged in a streaming session via eMBMS. The signal quality is related to at least one possible target node operable to provide unicast to the UE. The method further comprises obtaining 801 from the UE, a URL of a streaming server providing data for the streaming session. The receiving of the indication and/or the URL is an indication of that the UE wants to move to one of the at least one possible target nodes. When the obtained indication of signal quality relates to a plurality of possible target nodes, the method may comprise selecting 602 one of the plurality of possible target nodes, or one of the at least one possible target node, to be the target node for the wireless device. The method further comprises providing 803, to the UE, in response to the obtained indication, system information related to one of the at least one possible target node, i.e. related to a/the target node. The method further comprises triggering 804, in response to the obtained indication, set-up of radio and data bearers enabling the streaming session to continue via unicast via the target node.

In analogy with what have been written about the embodiments to be performed by a UE above, the indication of signal quality may comprise e.g. a report of results from measurements performed on signals from the at least one possible target node. The indication could be related to different quality measures, such as e.g. RSRP or RSRQ. Further, the system information should be such that it enables the UE to connect to the target node without performing a time consuming complete RA procedure. The system information could comprise e.g. a contention-free RA preamble for connection to the target node and/or an RA channel, such as PRACH, configuration for connection to the target node, including information e.g. about timing and subcarriers

The triggering 804 of a set-up of bearers enabling the streaming session to be continued via unicast may comprise e.g. triggering of an Initial Context Setup Request and Response between an MME associated with the target node and the target node, and a Create Session Request and Response between the MME and the EPG.

### Hardware implementations

The methods and techniques described above may be implemented in wireless devices and network nodes. Above, in association with describing the method embodiments, it is exemplified in which nodes in an LTE system the methods are intended to be implemented. Corresponding nodes in other communication systems may be denoted differently.

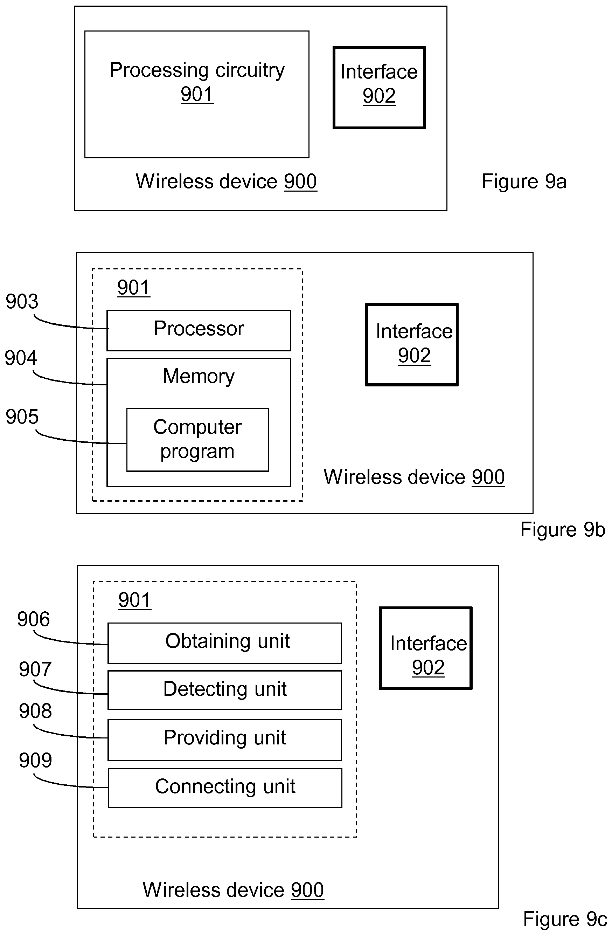

### Wireless device, figures 9a-9c

An exemplifying embodiment of a wireless device is illustrated in a general manner in figure 9a. The wireless device 900 is configured to perform at least one of the method embodiments described above with reference to any of figures 3-7. The wireless device 900 is associated with the same technical features, objects and advantages as the previously described method embodiments. The wireless device will be described in brief in order to avoid unnecessary repetition.

The wireless device may be implemented and/or described as follows:
The wireless device 900 is operable in a wireless communication network. The wireless device 900 comprises processing circuitry 901 and a communication interface 902. The processing circuitry 901 is configured to cause the wireless device 900 to obtain an URL, of a streaming server providing data for the streaming session from a first network node providing the eMBMS. The processing circuitry 901 is further configured to cause the wireless device to detect that a signal quality related to the eMBMS falls below a threshold. The processing circuitry 901 is further configured to cause the wireless device to provide the obtained URL to a second network node in order to induce the second network node to prepare for unicast of the streaming session via a target node; and further to connect to the target node for continuation of the streaming session. The communication interface 902, which may also be denoted e.g. Input/Output (I/O) interface, includes a network interface for sending data to and receiving data from network nodes.

The processing circuitry 901 could, as illustrated in figure 9b, comprise processing means, such as a processor 903, e.g. a CPU, and a memory 904 for storing or holding instructions. The memory would then comprise instructions, e.g. in form of a computer program 905, which when executed by the processing means 903 causes the wireless device 900 to perform the actions described above.

An alternative implementation of the processing circuitry 901 is shown in figure 9c. The processing circuitry here comprises an obtaining unit 906, configured to cause the wireless device to obtain a Uniform Resource Locator, URL, of a streaming server providing data for the streaming session from a first network node providing the eMBMS. The processing circuitry further comprises a detecting unit 907, configured to cause the wireless device to detect that a signal quality related to the eMBMS falls below a threshold. The processing circuitry further comprises a providing unit 908, configured to cause the wireless device to provide the obtained URL to a second network node in order to induce the second network node to prepare for unicast of the streaming session via a target node. The processing circuitry 901 further comprises a connecting unit 909, configured to cause the wireless device to connect to the target node for continuation of the streaming session. The processing circuitry could comprise more units for performing the actions of different embodiments, such as an indicating unit for indicating, to the second node, a signal quality related to at least one possible target node operable to provide unicast, etc.

The wireless devices described above could be configured for the different method embodiments described herein, such as obtaining system information related to the target node in response to the indicating of signal quality; and detecting that a signal quality related to at least one possible target node meets a threshold.

The wireless device 900 may be assumed to comprise further functionality, for carrying out regular functions associated with a wireless device.

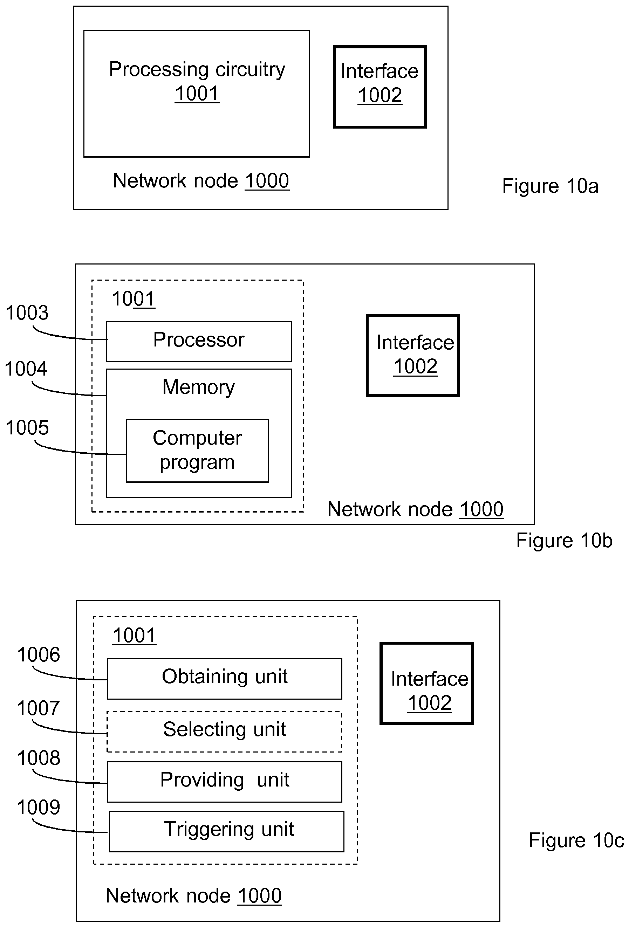

### Network node, figures 10a-10c

Embodiments herein also relate to a network node 1000 configured for carrying out method embodiments such as the one described above with reference to figure 8. An exemplifying embodiment of a network node, exemplified as an MME above, is illustrated in a general manner in figure 10a. The network node 1000 is associated with the same technical features, objects and advantages as the previously described method embodiments. The network node will be described in brief in order to avoid unnecessary repetition.

The network node 1000 is configured for supporting a wireless device which is to move from eMBMS to unicast. The network node 1000 comprises processing circuitry 1001 and a communication interface 1002. The processing circuitry 1001 is configured to cause the network node to obtain, from a wireless device engaged in a streaming session via eMBMS, an indication of signal quality related to at least one possible target node operable to provide unicast; and further to obtain, from the wireless device, an URL of a streaming server providing data for the streaming session. The processing circuitry 1001 is further configured to cause the network node to provide, to the wireless device in response to the obtained indication, system information related to one of the at least one possible target node, i.e. related to a/the target node, the system information enabling the wireless device to connect to the target node. The processing circuitry 1001 is further configured to cause the network node to trigger, in response to the obtained indication, set-up of radio and data bearers enabling the streaming session to continue via unicast via the target node. The communication interface 1002, which may also be denoted e.g. Input/Output (I/O) interface, includes a network interface for sending data to and receiving data from wireless devices and other network nodes.

The processing circuitry 1001 could, as illustrated in figure 10b, comprise processing means, such as a processor 1003, and a memory 1004 for storing or holding instructions. The memory would then comprise instructions, e.g. in form of computer program 1005, which when executed by the processing means 1003 causes the network node 1000 to perform the actions described above.

An alternative implementation of the processing circuitry 1001 is shown in figure 10c. The processing circuitry here comprises an obtaining unit 1006, configured to cause the network node to obtain, from a wireless device engaged in a streaming session via eMBMS, an indication of signal quality related to at least one possible target node operable to provide unicast; and further to obtain, from the wireless device, an URL of a streaming server providing data for the streaming session. The processing circuitry further comprises a providing unit 1008, configured to cause the network node to provide, to the wireless device in response to the obtained indication, system information related to one of the at least one possible target node, i.e. related to a/the target node. The processing circuitry further comprises a triggering unit 1009, configured to cause the network node to trigger, in response to the obtained indication, set-up of radio and data bearers enabling the streaming session to continue via unicast via the target node. The processing circuitry could comprise more units for performing the actions of different embodiments described herein, such as a selecting unit 1007 for selecting one of the at least one possible target node to be the target node for the wireless device, etc.

The network node 1000 may be assumed to comprise further functionality, for carrying out regular node functions. These functions would be at least partly different depending on whether the network node is an MCE or a node comprised in the OSS on a higher hierarchical level in the wireless communication network.

### Concluding remarks

The steps, functions, procedures, modules, units and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Alternatively, at least some of the steps, functions, procedures, modules, units and/or blocks described above may be implemented in software such as a computer program for execution by suitable processing circuitry including one or more processing units. The software could be carried by a carrier, such as an electronic signal, an optical signal, a radio signal, or a computer readable storage medium before and/or during the use of the computer program in the network nodes.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor. Examples of processing circuitry includes, but is not limited to, one or more microprocessors, one or more Digital Signal Processors, DSPs, one or more Central Processing Units, CPUs, and/or any suitable programmable logic circuitry such as one or more Field Programmable Gate Arrays, FPGAs, or one or more Programmable Logic Controllers, PLCs. That is, the units or modules in the arrangements in the different nodes described above could be implemented by a combination of analog and digital circuits, and/or one or more processors configured with software and/or firmware, e.g. stored in a memory. One or more of these processors, as well as the other digital hardware, may be included in a single application-specific integrated circuitry, ASIC, or several processors and various digital hardware may be distributed among several separate components, whether individually packaged or assembled into a system-on-a-chip, SoC.

It should also be understood that it may be possible to re-use the general processing capabilities of any conventional device or unit in which the proposed technology is implemented. It may also be possible to re-use existing software, e.g. by reprogramming of the existing software or by adding new software components.

It should be noted that although terminology from 3GPP LTE has been used in this disclosure to exemplify the invention, this should not be seen as limiting the scope of the invention to only the aforementioned system. Other wireless systems which support a broadcast service may also benefit from exploiting the ideas covered within this disclosure.

When using the word "comprise" or "comprising" it shall be interpreted as nonlimiting, i.e. meaning "consist at least of'.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

### ABBREVIATIONS

- BM-SC: Broadcast Multicast - Service Centre
- eMBMS: Enhanced Multicast Broadcast Multimedia Service
- eNB: Enhanced Node B
- EPG: Enhanced Pack Gateway (S/P-GW)
- GCSE AS: Group Communication Service Enabler Application Server
- MBSFN: MBMS over a Single Frequency Network
- MME: Mobility Management Entity
- QoE: Quality of Experience
- SFN: Single Frequency NW
- UE: User Equipment

## Claims

1. A method performed by a **wireless device** engaged in a streaming session via enhanced Multimedia Broadcast Multicast Service, eMBMS, in a communication network, the method comprising:
- obtaining (301,401,501,701) a Uniform Resource Locator, URL, of a streaming server providing data for the streaming session from a first network node providing the eMBMS;
- detecting (302,402,502,702) that a signal quality related to the eMBMS falls below a threshold;
- providing (303,406,409,503,704) the obtained URL to a second network node, when the wireless device about to leave an eMBMS coverage area, in order to induce the second network node to prepare for unicast of the streaming session via a target node; wherein the target node is associated with a different cell or an at least partly different coverage area than a cell or area in which the eMBMS is provided;
- connecting (304,408,410,505,703) to the target node for continuation of the streaming session;
- indicating (405,503), to the second node, a signal quality related to at least one possible target node operable to provide unicast; and
- obtaining (407,504) from the second network node, in response to the indicating of signal quality, system information related to the target node, wherein the system information enables the wireless device to connect to the target network node,
wherein the connection to the target node is based on the obtained system information.

2. The method according to claim 1, wherein the system information comprises a contention-free RA preamble for connection to the target node.

3. The method according to claims 1 or 2, wherein the system information comprises an RA channel configuration for connection to the target node, including information e.g. about timing and subcarriers.

4. The method according to any of claims 1-3, further comprising:
- detecting that a signal quality related to at least one possible target node meets a threshold before providing the URL.

5. The method according to any of claims 1-4, wherein the indicating of signal quality comprises reporting of results from measurements performed on signals from the at least one possible target node.

6. A method performed by a **network node** in a communication network, the method comprising:
- obtaining (801), from a wireless device engaged in a streaming session via enhanced Multimedia Broadcast Multicast Service, eMBMS, an indication of signal quality related to at least one possible target node operable to provide unicast; and further obtaining, from the wireless device, a Uniform Resource Locator, URL, of a streaming server providing data for the streaming session; wherein the target node is associated with a different cell or an at least partly different coverage area than a cell or area in which the eMBMS is provided;
- providing (803), to the wireless device in response to the obtained indication, system information related to one of the at least one possible target node, i.e. related to a/the target node, the system information enabling the wireless device to connect to the target node;
- triggering (804), in response to the obtained indication, set-up of radio and data bearers enabling the streaming session to continue via unicast via the target node; and
- selecting (802) one of the at least one possible target node to be the target node for the wireless device.

7. The method according to claim 6, wherein the system information comprises a contention-free RA preamble for connection to the target node.

8. The method according to claim 6 or 7, wherein the system information comprises an RA channel configuration for connection to the target node, including information e.g. about timing and subcarriers.

9. The method according to any of claims 6-8, wherein the indication of signal quality comprises a report of results from measurements performed on signals from the at least one possible target node.

10. A wireless device (900) operable to be engaged in a streaming session via enhanced Multimedia Broadcast Multicast Service, eMBMS, in a communication network, the wireless device comprising processing circuitry (901) and a communication interface (902), the processing circuitry (901) being configured to cause the wireless device (900) to:
- obtain a Uniform Resource Locator, URL, of a streaming server providing data for the streaming session from a first network node providing the eMBMS;
- detect that a signal quality related to the eMBMS falls below a threshold;
- provide the obtained URL to a second network node, when the wireless device about to leave an eMBMS coverage area, in order to induce the second network node to prepare for unicast of the streaming session via a target node; wherein the target node is assumed to be associated with a different cell or an at least partly different coverage area than the cell or area in which the eMBMS is provided; and to
- connect to the target node for continuation of the streaming session-indicate to the second node, a signal quality related to at least one possible target node operable to provide unicast; and to
- obtain from the second network node, in response to the indicating of signal quality, system information related to the target node, wherein the system information enables the wireless device to connect to the target network node.

11. The wireless device according to claim 10, being configured to connect to the target node based on the obtained system information.

12. The wireless device according to claim 10 or 11, wherein the system information comprises a contention-free RA preamble for connection to the target node.

13. The wireless device according to any of claims 10-12, wherein the system information comprises an RA channel configuration for connection to the target node, including information e.g. about timing and subcarriers.

14. The wireless device according to any of claims 10-13, being further configured to:
- detect that a signal quality related to at least one possible target node meets a threshold before providing the URL.

15. The wireless device according to any of claims 10-14, wherein the indicating of signal quality comprises reporting of results from measurements performed on signals from the at least one possible target node.

16. A network node (1000), operable in a wireless communication network, comprising processing circuitry (1001) and a communication interface 1002, the processing circuitry (1001) being configured to cause the network node (1000) to:
- obtain, from a wireless device engaged in a streaming session via enhanced Multimedia Broadcast Multicast Service, eMBMS, an indication of signal quality related to at least one possible target node operable to provide unicast; and further to obtain, from the wireless device, a Uniform Resource Locator, URL, of a streaming server providing data for the streaming session; wherein the target node is associated with a different cell or an at least partly different coverage area than a cell or area in which the eMBMS is provided;
- provide, to the wireless device in response to the obtained indication, system information related to one of the at least one possible target node, i.e. related to a/the target node, the system information enabling the wireless device to connect to the target node;
- trigger, in response to the obtained indication, set-up of radio and data bearers enabling the streaming session to continue via unicast via the target node; and
- select one of the at least one possible target node to be the target node for the wireless device.

17. The network node according to claim 16, wherein the system information comprises a contention-free RA preamble for connection to the target node.

18. The network node according to claim 16 or 17, wherein the system information comprises an RA channel configuration for connection to the target node, including information e.g. about timing and subcarriers.

19. The network node according to any of claims 16-18, wherein the indication of signal quality comprises a report of results from measurements performed on signals from the at least one possible target node.

20. Computer program, comprising instructions which, when executed on at least one processor, cause the at least one processor to carry out the method according to any of claims 1-9.

## Patentansprüche

1. Verfahren, das durch eine drahtlose Vorrichtung durchgeführt wird, die an einer Streaming-Sitzung über eMBMS (enhanced Multimedia Broadcast Multicast Service) in einem Kommunikationsnetz beteiligt ist, wobei das Verfahren Folgendes umfasst:
- Erlangen (301 ,401 ,501 ,701) eines URL (Uniform Resource Locator) eines Streaming-Servers, der Daten für die Streaming-Sitzung bereitstellt, von einem ersten Netzknoten, der den eMBMS bereitstellt;
- Erkennen (302, 402, 502, 702), dass eine Signalqualität in Bezug auf den eMBMS unter einen Schwellenwert fällt;
- Bereitstellen (303, 406, 409, 503, 704) des erlangten URL für einen zweiten Netzknoten, wenn die drahtlose Vorrichtung im Begriff ist, einen eMBMS-Versorgungsbereich zu verlassen, um den zweiten Netzknoten dazu zu bewegen, ein Unicast der Streaming-Sitzung über einen Zielknoten vorzubereiten; wobei der Zielknoten einer anderen Zelle oder einem mindestens teilweise anderen Versorgungsbereich als eine Zelle oder ein Bereich, in dem der eMBMS bereitgestellt wird, zugeordnet ist;
- Verbinden (304, 408, 410, 505, 703) mit dem Zielknoten zur Fortführung der Streaming-Sitzung;
- Angeben (405, 503), für den zweiten Knoten, einer Signalqualität in Bezug auf mindestens einen möglichen Zielknoten, der betreibbar ist, um das Unicast bereitzustellen; und
- Erlangen (407, 504) von dem zweiten Netzknoten, als Reaktion auf das Angeben einer Signalqualität, von Systeminformationen in Bezug auf den Zielknoten, wobei es die Systeminformationen der drahtlosen Vorrichtung ermöglichen, sich mit dem Zielnetzknoten zu verbinden,
wobei die Verbindung mit dem Zielknoten auf den erlangten Systeminformationen basiert.

2. Verfahren nach Anspruch 1, wobei die Systeminformationen eine konfliktfreie RA-Präambel zur Verbindung mit dem Zielknoten umfassen.

3. Verfahren nach den Ansprüchen 1 oder 2, wobei die Systeminformationen eine RA-Kanalkonfiguration zur Verbindung mit dem Zielknoten umfassen, einschließlich Informationen z. B. zu Zeitplanung und Unterträgern.

4. Verfahren nach einem der Ansprüche 1-3, ferner Folgendes umfassend:
- Erkennen, dass eine Signalqualität in Bezug auf mindestens einen möglichen Zielknoten einen Schwellenwert erfüllt, vor dem Bereitstellen des URL.

5. Verfahren nach einem der Ansprüche 1-4, wobei das Angeben einer Signalqualität Melden von Ergebnissen von Messungen, die an Signalen von dem mindestens einen möglichen Zielknoten durchgeführt werden, umfasst.

6. Verfahren, das durch einen Netzknoten in einem Kommunikationsnetz durchgeführt wird, wobei das Verfahren Folgendes umfasst:
- Erlangen (801), von einer drahtlosen Vorrichtung, die an einer Streaming-Sitzung über eMBMS (enhanced Multimedia Broadcast Multicast Service) beteiligt ist, einer Angabe einer Signalqualität in Bezug auf mindestens einen möglichen Zielknoten, der betreibbar ist, um ein Unicast bereitzustellen; und ferner Erlangen, von der drahtlosen Vorrichtung, eines URL (Uniform Resource Locator) eines Streaming-Servers, der Daten für die Streaming-Sitzung bereitstellt; wobei der Zielknoten einer anderen Zelle oder einem mindestens teilweise anderen Versorgungsbereich als eine Zelle oder ein Bereich, in dem der eMBMS bereitgestellt wird, zugeordnet ist;
- Bereitstellen (803), für die drahtlose Vorrichtung als Reaktion auf die erlangte Angabe, von Systeminformationen in Bezug auf einen von dem mindestens einen möglichen Zielknoten, d. h. in Bezug auf einen/den Zielknoten, wobei die Systeminformationen es der drahtlosen Vorrichtung ermöglichen, sich mit dem Zielnetzknoten zu verbinden;
- Auslösen (804), als Reaktion auf die erlangte Angabe, einer Einstellung von Funk- und Datenträgern, die es ermöglichen, dass die Streaming-Sitzung über Unicast über den Zielknoten fortgeführt wird; und
- Auswählen (802) eines von dem mindestens einen möglichen Zielknoten als der Zielknoten für die drahtlose Vorrichtung.

7. Verfahren nach Anspruch 6, wobei die Systeminformationen eine konfliktfreie RA-Präambel zur Verbindung mit dem Zielknoten umfassen.

8. Verfahren nach Anspruch 6 oder 7, wobei die Systeminformationen eine RA-Kanalkonfiguration zur Verbindung mit dem Zielknoten umfassen, einschließlich Informationen z. B. zu Zeitplanung und Unterträgern.

9. Verfahren nach einem der Ansprüche 6-8, wobei die Angabe einer Signalqualität eine Meldung von Ergebnissen von Messungen, die an Signalen von dem mindestens einen möglichen Zielknoten durchgeführt werden, umfasst.

10. Drahtlose Vorrichtung (900), die betreibbar ist, um an einer Streaming-Sitzung über eMBMS (enhanced Multimedia Broadcast Multicast Service) in einem Kommunikationsnetz beteiligt zu sein, wobei die drahtlose Vorrichtung eine Verarbeitungsschaltung (901) und eine Kommunikationsschnittstelle (902) umfasst, wobei die Verarbeitungsschaltung (901) dazu konfiguriert ist, die drahtlose Vorrichtung (900) zu Folgendem zu veranlassen:
- Erlangen eines URL (Uniform Resource Locator) eines Streaming-Servers, der Daten für die Streaming-Sitzung bereitstellt, von einem ersten Netzknoten, der den eMBMS bereitstellt;
- Erkennen, dass eine Signalqualität in Bezug auf den eMBMS unter einen Schwellenwert fällt;
- Bereitstellen des erlangten URL für einen zweiten Netzknoten, wenn die drahtlose Vorrichtung im Begriff ist, einen eMBMS-Versorgungsbereich zu verlassen, um den zweiten Netzknoten dazu zu bewegen, ein Unicast der Streaming-Sitzung über einen Zielknoten vorzubereiten; wobei angenommen wird, dass der Zielknoten einer anderen Zelle oder einem mindestens teilweise anderen Versorgungsbereich als die Zelle oder der Bereich, in dem der eMBMS bereitgestellt wird, zugeordnet ist; und
- Verbinden mit dem Zielknoten zur Fortführung der Streaming-Sitzung;
- Angeben, für den zweiten Knoten, einer Signalqualität in Bezug auf mindestens einen möglichen Zielknoten, der betreibbar ist, um das Unicast bereitzustellen; und
- Erlangen von dem zweiten Netzknoten, als Reaktion auf das Angeben einer Signalqualität, von Systeminformationen in Bezug auf den Zielknoten, wobei es die Systeminformationen der drahtlosen Vorrichtung ermöglichen, sich mit dem Zielnetzknoten zu verbinden.

11. Drahtlose Vorrichtung nach Anspruch 10, die dazu konfiguriert ist, sich mit dem Zielknoten basierend auf den erlangten Systeminformationen zu verbinden.

12. Drahtlose Vorrichtung nach Anspruch 10 oder 11, wobei die Systeminformationen eine konfliktfreie RA-Präambel zur Verbindung mit dem Zielknoten umfassen.

13. Drahtlose Vorrichtung nach einem der Ansprüche 10-12, wobei die Systeminformationen eine RA-Kanalkonfiguration zur Verbindung mit dem Zielknoten umfassen, einschließlich Informationen z. B. zu Zeitplanung und Unterträgern.

14. Drahtlose Vorrichtung nach einem der Ansprüche 10-13, die ferner zu Folgendem konfiguriert ist:
- Erkennen, dass eine Signalqualität in Bezug auf mindestens einen möglichen Zielknoten einen Schwellenwert erfüllt, vor dem Bereitstellen des URL.

15. Drahtlose Vorrichtung nach einem der Ansprüche 10-14, wobei das Angeben einer Signalqualität Melden von Ergebnissen von Messungen, die an Signalen von dem mindestens einen möglichen Zielknoten durchgeführt werden, umfasst.

16. Netzknoten (1000), der in einem drahtlosen Kommunikationsnetz betreibbar ist, umfassend eine Verarbeitungsschaltung (1001) und eine Kommunikationsschnittstelle 1002, wobei die Verarbeitungsschaltung (1001) dazu konfiguriert ist, den Netzknoten (1000) zu Folgendem zu veranlassen:
- Erlangen, von einer drahtlosen Vorrichtung, die an einer Streaming-Sitzung über eMBMS (enhanced Multimedia Broadcast Multicast Service) beteiligt ist, einer Angabe einer Signalqualität in Bezug auf mindestens einen möglichen Zielknoten, der betreibbar ist, um ein Unicast bereitzustellen; und ferner Erlangen, von der drahtlosen Vorrichtung, eines URL (Uniform Resource Locator) eines Streaming-Servers, der Daten für die Streaming-Sitzung bereitstellt; wobei der Zielknoten einer anderen Zelle oder einem mindestens teilweise anderen Versorgungsbereich als eine Zelle oder ein Bereich, in dem der eMBMS bereitgestellt wird, zugeordnet ist;
- Bereitstellen, für die drahtlose Vorrichtung als Reaktion auf die erlangte Angabe, von Systeminformationen in Bezug auf einen von dem mindestens einen möglichen Zielknoten, d. h. in Bezug auf einen/den Zielknoten, wobei die Systeminformationen es der drahtlosen Vorrichtung ermöglichen, sich mit dem Zielnetzknoten zu verbinden;
- Auslösen, als Reaktion auf die erlangte Angabe, einer Einstellung von Funk- und Datenträgern, die es ermöglichen, dass die Streaming-Sitzung über Unicast über den Zielknoten fortgeführt wird; und
- Auswählen eines von dem mindestens einen möglichen Zielknoten als der Zielknoten für die drahtlose Vorrichtung.

17. Netzknoten nach Anspruch 16, wobei die Systeminformationen eine konfliktfreie RA-Präambel zur Verbindung mit dem Zielknoten umfassen.

18. Netzknoten nach Anspruch 16 oder 17, wobei die Systeminformationen eine RA-Kanalkonfiguration zur Verbindung mit dem Zielknoten umfassen, einschließlich Informationen z. B. zu Zeitplanung und Unterträgern.

19. Netzknoten nach einem der Ansprüche 16-18, wobei die Angabe einer Signalqualität eine Meldung von Ergebnissen von Messungen, die an Signalen von dem mindestens einen möglichen Zielknoten durchgeführt werden, umfasst.

20. Computerprogramm, Anweisungen umfassend, die, wenn sie an mindestens einem Prozessor ausgeführt werden, den mindestens einen Prozessor veranlassen, das Verfahren nach einem der Ansprüche 1-9 zu realisieren.

## Revendications

1. Procédé réalisé par un dispositif sans fil engagé dans une session de diffusion en continu via un service de diffusion multidiffusion multimédia amélioré, eMBMS, dans un réseau de communication, le procédé comprenant :
- l'obtention (301, 401, 501, 701) d'un localisateur uniforme de ressources, URL, d'un serveur de diffusion en continu fournissant des données pour la session de diffusion en continu à partir d'un premier noeud de réseau fournissant l'eMBMS ;
- la détection (302, 402, 502, 702) qu'une qualité de signal liée à l'eMBMS tombe en dessous d'un seuil ;
- la fourniture (303, 406, 409, 503, 704) de l'URL obtenu à un second noeud de réseau, lorsque le dispositif sans fil est sur le point de quitter une zone de couverture eMBMS, afin d'inciter le second noeud de réseau à se préparer à la monodiffusion de la session de diffusion en continu via un noeud cible ; dans lequel le noeud cible est associé à une cellule différente ou à une zone de couverture au moins partiellement différente d'une cellule ou zone dans laquelle l'eMBMS est fourni ;
- la connexion (304, 408, 410, 505, 703) au noeud cible pour la poursuite de la session de diffusion en continu ;
- l'indication (405, 503), au second noeud, d'une qualité de signal liée à au moins un noeud cible possible servant à fournir la monodiffusion ; et
- l'obtention (407, 504) du second noeud de réseau, en réponse à l'indication de la qualité de signal, d'informations système liées au noeud cible, dans lequel les informations système permettent au dispositif sans fil de se connecter au noeud de réseau cible,
dans lequel la connexion au noeud cible est basée sur les informations système obtenues.

2. Procédé selon la revendication 1, dans lequel les informations système comprennent un préambule d'accès aléatoire sans contention pour la connexion au noeud cible.

3. Procédé selon les revendications 1 ou 2, dans lequel les informations système comprennent une configuration de canal d'accès aléatoire pour la connexion au noeud cible, comportant des informations par ex. sur la synchronisation et les sous-porteuses.

4. Procédé selon l'une quelconque des revendications 1 à 3, comprenant en outre :
- la détection qu'une qualité de signal liée à au moins un noeud cible possible atteint un seuil avant la fourniture de l'URL.

5. Procédé selon l'une quelconque des revendications 1 à 4, dans lequel l'indication de la qualité de signal comprend le rapport de résultats de mesures réalisées sur des signaux provenant de l'au moins un noeud cible possible.

6. Procédé réalisé par un noeud de réseau dans un réseau de communication, le procédé comprenant :
- l'obtention (801), à partir d'un dispositif sans fil engagé dans une session de diffusion en continu via un service de diffusion multidiffusion multimédia amélioré, eMBMS, d'une indication de la qualité de signal liée à au moins un noeud cible possible servant à fournir la monodiffusion ; et en outre l'obtention, à partir du dispositif sans fil, d'un localisateur uniforme de ressources, URL, d'un serveur de diffusion en continu fournissant des données pour la session de diffusion en continu ; dans lequel le noeud cible est associé à une cellule différente ou à une zone de couverture au moins partiellement différente d'une cellule ou zone dans laquelle l'eMBMS est fourni ;
- la fourniture (803), au dispositif sans fil en réponse à l'indication obtenue, d'informations système liées à l'un de l'au moins un noeud cible possible, c'est-à-dire liées à un/au noeud cible, les informations système permettant au dispositif sans fil de se connecter au noeud cible ;
- le déclenchement (804), en réponse à l'indication obtenue, de l'établissement de supports radio et de données permettant à la session de diffusion en continu de se poursuivre en monodiffusion via le noeud cible ; et
- la sélection (802) d'un de l'au moins un noeud cible possible pour qu'il soit le noeud cible pour le dispositif sans fil.

7. Procédé selon la revendication 6, dans lequel les informations système comprennent un préambule d'accès aléatoire sans contention pour la connexion au noeud cible.

8. Procédé selon la revendication 6 ou 7, dans lequel les informations système comprennent une configuration de canal d'accès aléatoire pour la connexion au noeud cible, comportant des informations par ex. sur la synchronisation et les sous-porteuses.

9. Procédé selon l'une quelconque des revendications 6 à 8, dans lequel l'indication de la qualité de signal comprend un rapport de résultats de mesures réalisées sur des signaux provenant de l'au moins un noeud cible possible.

10. Dispositif sans fil (900) servant à être engagé dans une session de diffusion en continu via un service de diffusion multidiffusion multimédia amélioré, eMBMS, dans un réseau de communication, le dispositif sans fil comprenant un circuit de traitement (901) et une interface de communication (902), le circuit de traitement (901) étant configuré pour amener le dispositif sans fil (900) à :
- obtenir un localisateur uniforme de ressources, URL, d'un serveur de diffusion en continu fournissant des données pour la session de diffusion en continu à partir d'un premier noeud de réseau fournissant l'eMBMS ;
- détecter qu'une qualité de signal liée à l'eMBMS tombe en dessous d'un seuil ;
- fournir l'URL obtenu à un second noeud de réseau, lorsque le dispositif sans fil est sur le point de quitter une zone de couverture eMBMS, afin d'inciter le second noeud de réseau à se préparer à la monodiffusion de la session de diffusion en continu via un noeud cible ; dans lequel le noeud cible est supposé être associé à une cellule différente ou à une zone de couverture au moins partiellement différente de la cellule ou zone dans laquelle l'eMBMS est fourni ; et pour
- se connecter au noeud cible pour la poursuite de la session de diffusion en continu
- indiquer au second noeud une qualité de signal liée à au moins un noeud cible possible servant à fournir la monodiffusion ; et pour
- obtenir du second noeud de réseau, en réponse à l'indication de la qualité de signal, des informations système liées au noeud cible, dans lequel les informations système permettent au dispositif sans fil de se connecter au noeud de réseau cible.

11. Dispositif sans fil selon la revendication 10, configuré pour se connecter au noeud cible sur la base des informations système obtenues.

12. Dispositif sans fil selon la revendication 10 ou 11, dans lequel les informations système comprennent un préambule d'accès aléatoire sans contention pour la connexion au noeud cible.

13. Dispositif sans fil selon l'une quelconque des revendications 10 à 12, dans lequel les informations système comprennent une configuration de canal d'accès aléatoire pour la connexion au noeud cible, comportant des informations par ex. sur la synchronisation et les sous-porteuses.

14. Dispositif sans fil selon l'une quelconque des revendications 10 à 13, en outre configuré pour :
- détecter qu'une qualité de signal liée à au moins un noeud cible possible atteint un seuil avant la fourniture de l'URL.

15. Dispositif sans fil selon l'une quelconque des revendications 10 à 14, dans lequel l'indication de la qualité de signal comprend le rapport de résultats de mesures réalisées sur des signaux provenant de l'au moins un noeud cible possible.

16. Noeud de réseau (1000), pouvant fonctionner dans un réseau de communication sans fil, comprenant un circuit de traitement (1001) et une interface de communication (1002), le circuit de traitement (1001) étant configuré pour amener le noeud de réseau (1000) à :
- obtenir, à partir d'un dispositif sans fil engagé dans une session de diffusion en continu via un service de diffusion multidiffusion multimédia amélioré, eMBMS, une indication de la qualité de signal liée à au moins un noeud cible possible servant à fournir la monodiffusion ; et en outre pour obtenir, à partir du dispositif sans fil, un localisateur uniforme de ressources, URL, d'un serveur de diffusion en continu fournissant des données pour la session de diffusion en continu ; dans lequel le noeud cible est associé à une cellule différente ou à une zone de couverture au moins partiellement différente d'une cellule ou zone dans laquelle l'eMBMS est fourni ;
- fournir, au dispositif sans fil en réponse à l'indication obtenue, des informations système liées à l'un de l'au moins un noeud cible possible, c'est-à-dire liées à un/au noeud cible, les informations système permettant au dispositif sans fil de se connecter au noeud cible ;
- déclencher, en réponse à l'indication obtenue, l'établissement de supports radio et de données permettant à la session de diffusion en continu de se poursuivre en monodiffusion via le noeud cible ; et
- sélectionner l'un de l'au moins un noeud cible possible pour qu'il soit le noeud cible pour le dispositif sans fil.

17. Noeud de réseau selon la revendication 16, dans lequel les informations système comprennent un préambule d'accès aléatoire sans contention pour la connexion au noeud cible.

18. Noeud de réseau selon la revendication 16 ou 17, dans lequel les informations système comprennent une configuration de canal d'accès aléatoire pour la connexion au noeud cible, comportant des informations, par ex. sur la synchronisation et les sous-porteuses.

19. Noeud de réseau selon l'une quelconque des revendications 16 à 18, dans lequel l'indication de la qualité de signal comprend un rapport de résultats de mesures réalisées sur des signaux provenant de l'au moins un noeud cible possible.

20. Programme informatique, comprenant des instructions qui, lorsqu'elles sont exécutées sur au moins un processeur, amènent l'au moins un processeur à mettre en oeuvre le procédé selon l'une quelconque des revendications 1 à 9.
